# EUROPEAN PATENT SPECIFICATION

(11) **EP 2 915 386 B1**
(45) Date of publication and mention of the grant of the patent: **10.05.2017**
(21) Application number: 13850189.5
(22) Date of filing: 15.08.2013
(51) Int. Cl.: H04W 52/40, H04W 52/24, H04W 52/36, H04W 52/34, H04W 52/14, H04W 52/58

(54) **METHODS AND APPARATUSES FOR BOOSTING CHANNEL TRANSMISSION IN A NETWORK**
VERFAHREN UND VORRICHTUNGEN ZUR VERSTÄRKUNG DER KANALÜBERTRAGUNG IN EINEM NETZWERK
PROCÉDÉS ET APPAREILS POUR AMPLIFIER UNE ÉMISSION DE CANAL DANS UN RÉSEAU

(30) Priority: 02.11.2012 US 201261796096 P
(43) Date of publication of application: 09.09.2015
(73) Proprietor: Telefonaktiebolaget LM Ericsson (publ), 164 83 Stockholm (SE)
(72) Inventor: VON WRYCZA, Peter, S--114 57 Stockholm (SE); SAMUEL BEBAWY, Michael, San Jose, California 95134 (US); WANG, Yi-Pin Eric, Fremont, California CA 94539 (US); LARSSON, Erik, S-753 22 Uppsala (SE)
(74) Representative: Ericsson
(86) International application number: PCT/SE2013/050972
(87) International publication number: WO 2014/070068

(56) References cited:
- WO-A1-03/017525
- WO-A1-03/077584
- WO-A1-2006/122805
- WO-A1-2010/051514
- WO-A1-2010/051514
- WO-A2-2008/100954
- WO-A2-2011/041719
- US-A1- 2012 275 403
- US-A1- 2012 275 403

## Description

### TECHNICAL FIELD

The technology relates to radio communications, and in particular, to methods for enabling adjustment of transmit power for a User Equipment, UE, in a wireless network as well as a network node and a UE.

### BACKGROUND

A cellular network typically includes some areas with high traffic, e.g., a high concentration of users. In those areas it may be desirable to deploy additional capacity to ensure user satisfaction. The added capacity may be in the form of additional macro base stations (e.g., more NodeBs in WCDMA terminology) and/or in the form of lower output power base stations. The latter cover a smaller area in order to concentrate the capacity boost in a smaller area. Examples include micro, pico, home base stations, relays, etc. Often, there are also areas with poor coverage where there is a need for coverage expansion, and one way to address these coverage issues is to deploy a low output power node to provide the coverage boost in a small area. A benefit with lower output power nodes in these situations is that their impact on the macro network is reduced, e.g., a smaller area in the macro network experiences interference.

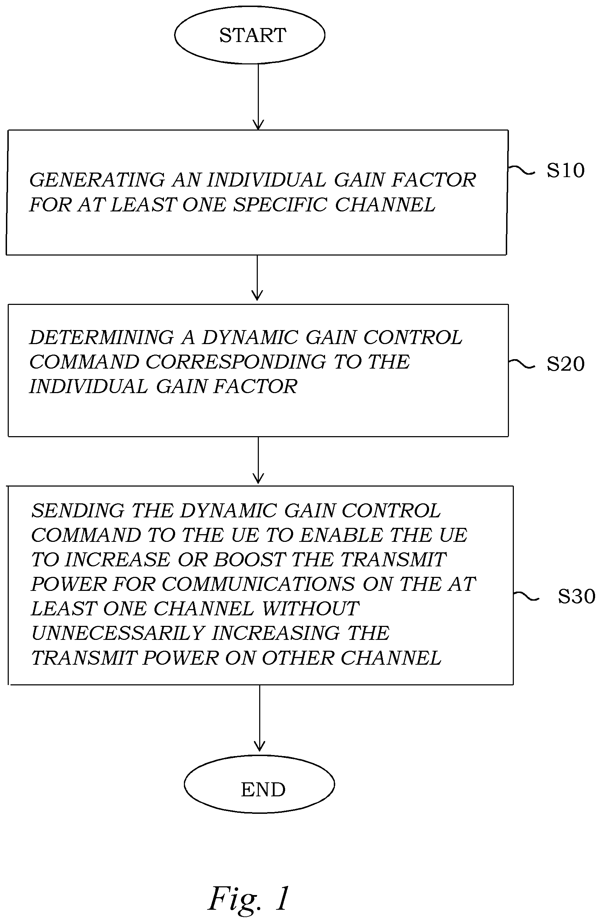

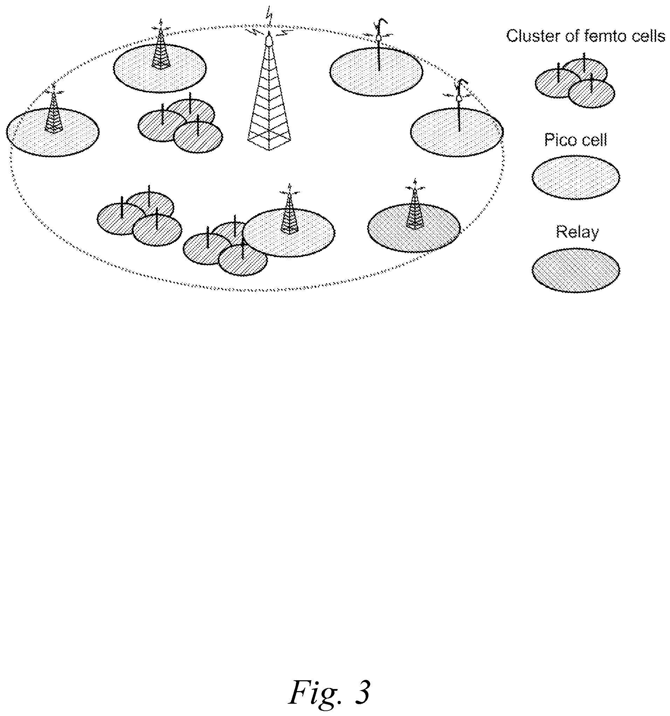

A network deployment that uses both higher power macro nodes and lower power smaller nodes is referred to here as a heterogeneous network. Multiple layers in a heterogeneous network are illustrated in the example of Figure 3 below. A higher power macro base station (the high tower) provides a wide area coverage called a macro cell, and lower power nodes (the shorter structures) provide small area capacity/coverage in smaller cells. In this example, pico base stations and pico cells, relays and relay cells, and home base stations sometimes called femto base stations and femto cells are shown. Although Figure 1 shows clusters of femto cells, single femto cell deployments may also be used.

Because cells in a heterogeneous network typically operate with different pilot power levels, there can be imbalances between the radio uplink (UL) and the radio downlink (DL) in the network. Cells are typically selected by user equipments (UEs) based on their measurements of the received signal strength of downlink transmissions from those cells, with UEs being served by the best downlink cell alternative. However, the uplink quality depends mainly on the distance between the UE and the serving base station site and is generally independent of the serving cell's downlink pilot power. As a result of a UE's serving cell/base station selection being based on downlink pilot signals, UEs may have a better uplink signal quality to a non-serving cell. Two examples of use-cases for heterogeneous network deployment include coverage holes and capacity enhancement for localized traffic hotspots.

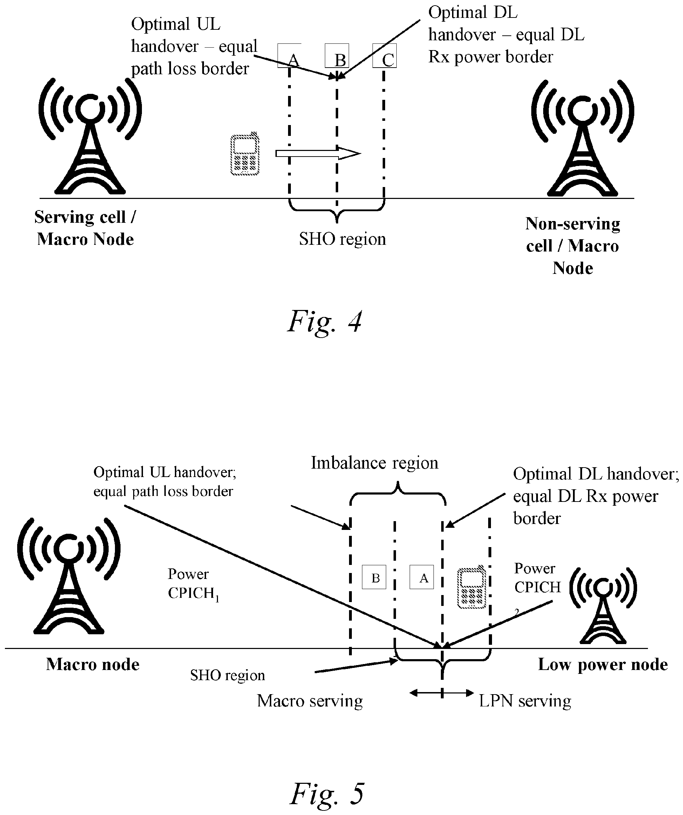

In a WCDMA system, a UE in soft handover (SHO) is power-controlled by the best uplink cell. If the best UL is a non-serving cell, one problem is how to ensure that important control information can be reliably received at the serving macro base station. The problem of weak links becomes particularly pronounced whenever the imbalance between the best UL and DL may become large, such as for heterogeneous networks or multi-flow operation.
Soft handover (SHO), also referred to as macro diversity, and fast closed-loop power control are features of WCDMA and EUL. Figure 4 illustrates a traditional HSPA deployment scenario with two nodes having a similar transmit power level. Ideally, a UE moving from the serving cell towards the non-serving cell would enter the SHO region at point A (*Event 1a*), at point B (*Event 1d*) a serving cell change would occur (non-serving becomes serving and vice versa), and at point C (*Event 1b*) the UE would leave the SHO region. It is the RNC that is in control of reconfigurations, which implies rather long delays for, e.g., performing a cell change. During SHO, the uplink power control is based on so-called "or for the down" principle meaning that if one of the cells issues a transmit power control TPC command "down", the UE will reduce its transmit power. Thu, effectively the UE is power-controlled by the uplink cell with the best quality radio connection. Since the nodes have roughly the same transmit power, the optimal DL and UL cell borders will coincide (the path loss from the UE to the two nodes will be equal at point B). Hence, in an ideal setting and from a static (long-term fading) point of view, the serving cell would always correspond to the best uplink. However, due to practical implementation issues, e.g., reconfiguration delays, and fast fading, the UE may be power-controlled by the non-serving cell during SHO. In such case, the serving cell may have difficulty in receiving accurately or at all essential control channel information due to the weaker radio link between the serving cell and UE. For example, the uplink high speed Dedicated Physical Control Channel (HS-DPCCH) and uplink scheduling information need to be received in the serving cell. For heterogeneous networks, other factors make the imbalance more pronounced.
Possible solutions include increasing uplink gain factors using of radio resource control (RRC) signalling and sending repeated transmissions, e.g., based on Hybrid automatic repeat request (HARQ).
Since low power nodes (LPNs) and macro NodeBs in a heterogeneous network have different transmit powers, the uplink (UL) and downlink (DL) cell borders do not necessarily coincide. An example of this is when a UE has a smaller path loss to the LPN, while a stronger received power is from the macro NodeB. In such a scenario, the UL is better served by the LPN, even though the DL is provided by the serving macro NodeB. This is shown in Figure 5. The region between the equal path loss border and equal downlink received power (e.g., common pilot channel CPICH receive power) border is referred to as an imbalance region.

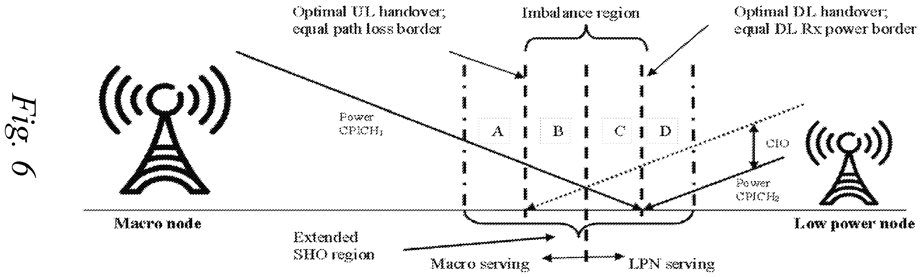

In this region, some fundamental problems may be encountered. For example, a UE in position A would have the Macro Node as the serving cell, but be power controlled towards the LPN. Due to the UL-DL imbalance, the UL towards the serving macro node is weak, which means that important control information, such as scheduling information or HS-DPCCH, may not be reliably decoded in the serving cell. Furthermore, a UE in position B has the Macro Node as the serving cell and is also power controlled by the Macro Node (the LPN not included in the active set). But due to the UL-DL imbalance, the UE uplink transmission causes excessive interference at the LPN node. Furthermore, in this scenario, the benefits of macro offloading towards the LPN may not be fully realized. One way of improving these problems is to utilize the available RNC-based cell selection offset parameters. By adjusting or tuning a Cell Individual Offset (CIO) parameter, the handover border can be shifted towards a more optimal UL border and consequently include the LPN in the active set. Similarly, the WCDMA IN_RANGE and OUT_RANGE parameters may be adjusted in order to extend the SHO region. The effect of such adjustments is illustrated in an example shown in Figure 6.

These adjustments are beneficial from a system performance point of view, but some difficulties remain:
Scenario 1 - A UE in position A may experience a poor DL from the non-serving LPN. This may complicate a reliable detection of UL-related DL channels, e.g., E-HICH and F-DPCH from the LPN.
Scenario 2 - A UE in position B has the macro as serving cell but is (in general) power- controlled towards the LPN. Hence, the uplink signal towards the serving cell might be weak and thereby complicate reliable reception of control channel information at the serving cell.
Scenario 3 - A UE in position C is served by the LPN. However, its DL might be poor and thereby complicate a reliable reception of control information, e.g., HS-SCCH and E-AGCH.
Scenario 2 - A UE in position B has the macro as serving cell but is (in general) power- controlled towards the LPN. Hence, the uplink signal towards the serving cell might be weak and thereby complicate reliable reception of control channel information at the serving cell.
Scenario 3 - A UE in position C is served by the LPN. However, its DL might be poor and thereby complicate a reliable reception of control information, e.g., HS-SCCH and E-AGCH.
Scenario 4 - A UE in position D might experience a poor UL towards the non-serving macro cell and thereby complicate the uplink reception at the macro cell.

To maximize the potential gains provided by range extension, the problems associated with these different scenarios need to be solved.

WO 2010/050154 A1 discloses a technology related to DC-HSUPA, that is, an uplink multicarrier scenario utilizing two independent UL cells, with associated physical channels where TPC operation is used for both cells. The inner-loop power control (TPC) in WCDMA adjusts the DPCCH power. The power of all other UL physical channels are related to DPCCH via a gain value, also referred to as a beta-value. This beta-value are set semi-statically via higher-order RNC signaling which will change the power of all UL physical channels.

In WO 2012/050506 A1 there is disclosed a method that provides a quality representation at a radio network controller of an uplink control channel from the user equipment to the serving radio base station. The radio network controller generates an updated power quality target for a reference control channel based on this quality representation, and transmits the updated power quality target to at least one of the serving radio base station and the at least one other radio base station. This updated power quality target thereby controls the at least one of the serving radio base station and the at least one other radio base station to transmit at least one transmit power control command, TPC, to the user equipment to trigger an adjustment of the transmit power of the uplink control channel. The disclosed technology makes use of transmit power control command, TPC, to control the transmit power of a particular User Equipment, UE. TPCs instructs a UE to increase/decrease the transmit power on all channels.

### SUMMARY

It is an object to provide a method for enabling adjustment of the transmit power of a User Equipment, UE, in a wireless network. The method comprises the steps of, (a) generating an individual gain factor for at least one specific channel, (b) determining a dynamic gain control command corresponding to the individual gain factor, and (c) sending the dynamic gain control command to the UE to enable the UE to increase or boost the transmit power for communications on said at least one specific channel without increasing transmit power on other channels.

This method gives a highly reliable and easily controlled procedure for enabling the UE to increase the transmit power for certain specific important channel(s) while at the same time minimizing the interference within the network.

There is moreover provided a network node. The network node comprises a processing unit that is configured to determine, for a User Equipment, UE, an individual gain factor for at least one specific channel and to determine a gain control command corresponding to the gain factor for said at least one specific channel. The network node further comprises radio circuitry that is configured to send the dynamic gain control command to the UE to enable the UE to increase or boost transmit power for communications on said at least one specific channel without unnecessarily increasing transmit power on other channels

There is also provided for a method of enabling an adjustment of transmit power of a User Equipment, UE, in wireless network. The method comprises the steps of, (i) determining uplink signal quality, (ii) informing a network node of the uplink signal quality to enable the network node to determine a dynamic gain control command corresponding to an individual gain factor for at least one specific channel, and (iii) receiving the dynamic gain control command from the network node to thereby enable the UE to increase or boost the transmit power for communications on the at least one specific channel without unnecessarily increasing transmit power on other channels.

This method provides for an efficient way of controlling a UEs transmit power resources. By way of example, this will allow a UE, or a network node, to request a transmit power boost for the UE when such a boost is deemed to be needed. One particular advantage with this method is that it provides for a mechanism that can lessen the amount of information that needs to be retransmitted due to poor uplink quality, i.e. information pertaining to a received Negative Acknowledgement, NACK, on the downlink.

There is also provided a User Equipment, UE. The UE comprises radio circuitry configured to receive a dynamic gain control command corresponding to an individual gain factor for at least one specific channel and a processing unit configured to process the dynamic gain control command to enable the UE to increase or boost transmit power for communications on the at least one specific channel without unnecessarily increasing transmit power on other channels.

Other advantages offered by the invention will be appreciated when reading the below description of embodiments of the invention.

### BRIEF DESCRIPTION OF THE DRAWINGS

The invention, together with further objects and advantages thereof, may best be understood by making reference to the following description taken together with the accompanying drawings, in which:
FIG. 1 is schematic diagrams illustrating an example of a method for enabling an adjustment of the transmit power of a User Equipment, UE, according to an illustrative embodiment.

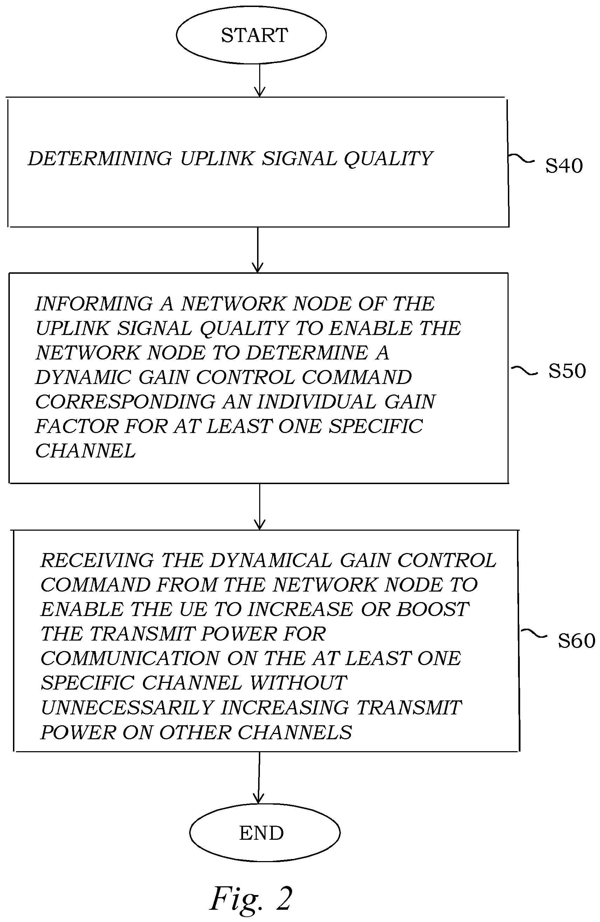

FIG. 2 is a schematic diagram illustrating an example of a method used to enable an adjustment of the transmit power according to a particular embodiment.
FIG. 3 gives a schematic illustration of a heterogeneous network in which the present technology can be used.
FIG. 4 gives a schematic illustration of a UE during soft handover in a network.
FIG. 5 illustrates a soft handover in a network with a macro node and a low power node where the UE is closer to the low power node.
FIG. 6 illustrates, in larger details, a soft handover in a network with a macro node and a low power node where the UE is closer to the low power node.
FIG. 7 gives a schematic illustration of the interfaces of a UE, a network and a core network.
FIG. 8 is a block diagram illustrating a network node in an exemplary embodiment.
FIG.9 gives a schematic illustration of a signaling scheme according to an exemplary embodiment of the present invention.
FIG. 10 gives a schematic illustration of an alternative signaling scheme according to an exemplary embodiment.
FIG. 11 gives a schematic block diagram illustrating a network node according to an illustrative embodiment.
FIG. 12 gives a schematic block diagram illustrating a User Equipment, UE, according to an illustrative embodiment

### DETAILED DESCRIPTION

Throughout the drawings, the same reference numbers are used for similar or corresponding elements.
The following sets forth specific details, such as particular embodiments for purposes of explanation and not limitation. But it will be appreciated by one skilled in the art that other embodiments may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

Although the description is given for user equipment (UE), it should be understood by the skilled in the art that "UE" is a non-limiting term comprising any wireless device or node equipped with a radio interface allowing for at least one of: transmitting signals in the UL and receiving and/or measuring signals in the DL. Some examples of UE in its general sense are a PDA, laptop, mobile, sensor, fixed relay, mobile relay, and a radio network node (e.g., an LMU or a femto base station or a small base station using the terminal technology). A UE may be and preferably is capable of operating or at least performing measurements in one or more frequencies, carrier frequencies, component carriers or frequency bands. A UE may operate in a single-RAT, a multi-RAT, or a multi-standard mode.

A cell is associated with a base station, where a base station comprises in a general sense any node transmitting radio signals in the downlink (DL) and/or receiving radio signals in the uplink (UL). Some example base stations are eNodeB, eNB, Node B, macro/micro/pico radio base station, home eNodeB, relay, repeater, sensor, transmitting-only radio nodes or receiving-only radio nodes. A base station may operate and/or perform measurements in one or more frequencies, carrier frequencies or frequency bands and may be capable of carrier aggregation. A base station may also use a single-radio access technology (RAT), a multi-RAT, or operate using a multi-standard node, e.g., using the same or different base band modules for different RATs.

The signaling described is either via direct links or logical links, e.g., via higher layer protocols and/or via one or more network nodes. For example, signaling from a coordinating node may pass another network node, e.g., a radio node.

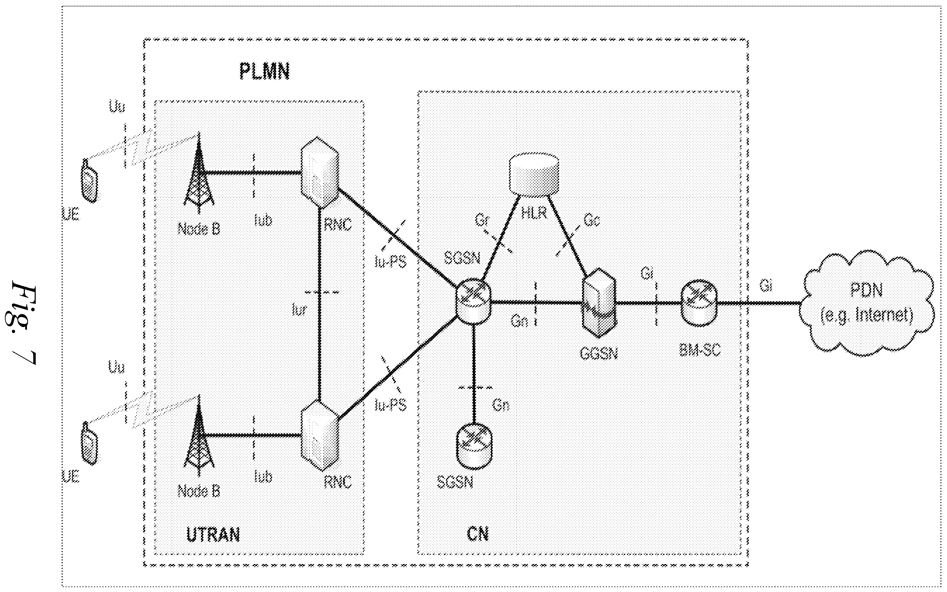

Although the following description uses WCMDA UMTS as an example cellular radio communications system, the example embodiments are not limited to WCDMA, but may apply to other Radio Access Networks (RAN), single-RAT or multi-RAT. Figure 7 shows a diagram of an example WCDMA UMTS system. The nodes and interfaces are well known to those skilled in the art.

Embodiments described herein may be considered as independent embodiments or may be considered in any combination with each other to describe non-limiting examples. In the non-limiting examples below, a eNB is used as the example base station, a macro eNB is used as the example of, and the term includes, any type of larger base station serving a larger cell, referred to as a macro cell, and a pico eNB is used as the example of, and the term includes, any type of smaller base station serving a smaller cell, referred to as a pico cell.

For a stable and well-performing network, it is necessary that important UL control information can be received. Examples of such information are DL-related acknowledgement/non-acknowledgement (ACK/NACK) information carried on the HS-DPCCH, enhanced uplink (EUL) control information carried on the E-DPCCH, and in-band scheduling information conveyed via the E-DPDCH.

Reception quality can be improved by boosting (increasing) the transmit power of important channels. Although boosting values could be conveyed to the UE using higher-layer signaling or HS-SCCH orders, this approach may not be sufficiently dynamic and responsive because higher-layer signaling and orders are associated with delays, etc. Moreover, the inventors have recognized that it is important to boost an appropriate amount because too much or too little boosting may decrease performance. The technology therefore selectively and dynamically boosts transmit power on one or more specific channels. It does this by dynamically setting and adjusting individual gain factors for specific channels.

It is beneficial to provide a method(s) and apparatus(es) that yields a more dynamic and selective control of the transmit power utilized by a User Equipment, UE, for uplink communication in a wireless network.

The technology boosts transmission for a specific channel, e.g. one or more uplink control channels, when that channel communication link is poor quality or simply too weak for acceptable reception. The technology therefore selectively and dynamically boosts transmit power on one or more specific channels. It does this by dynamically setting and adjusting individual gain factors for specific channels.

One or more nodes detects a weak or poor quality radio link for a specific channel involved in a UE connection, e.g., to a serving base station in a soft handover situation. Based on that detection, one or more nodes generate an individual gain factor for that specific channel which is sent to and/or used by the UE to increase or boost its transmit power for communications on that specific channel. One example gain factor includes one or more gain offset values. In this way, all the transmit power on other channels is not unnecessarily increased, increasing interference, reducing performance, and draining UE battery.

To be slightly more specific regarding the formulation of unnecessarily increasing the transmit power as stated above and in what follows, the proposed technology provides a transmit power boost mechanism where, for example, the transmit power is allowed to be boosted on one or more specific channels while keeping the transmit power unaltered on the other available channels. This particular feature could for example be useful in those cases where it is deemed unnecessary to boost the transmit power on all channels. In another possible exemplary scenario transmit power boosting could be provided on all channels where however certain specific channels are allowed a larger transmit power boost. In this latter case it is understood that not all channels are in need of the same amount of transmit power boost, instead the mechanism provides for different boost amounts on different channels. It could for example be the case that certain important communication channels are allowed a large transmit power boost while the remaining channels, or a subgroup of those channels, that are also in need of a boost, are only allowed a fraction of the transmit power boost of those specific channels deemed more important at that specific time.

That is, the proposed technology provides a mechanism that enables different transmit power boosts on different channels. This could therefore, for example, mean that the transmit power is unaltered on certain channels while other specific channels are allowed an adjusted transmit power, i.e. a transmit power boost. Other versions are however foreseeable, as stated above, such as providing different transmit power boosts on different channels. This could for example mean that certain channels are allowed a certain increase of the transmit power while other channels are allowed a different increase of the transmit power.

In other words, the technology provides for a method of enabling adjustment of transmit power of a User Equipment, UE, in a wireless network. The method comprises the steps of: i) generating an individual gain factor for at least one specific channel, ii) determining a dynamic gain control command corresponding to the individual gain factor, and iii) sending the dynamic gain control command to the UE to enable the UE to increase or boost the transmit power for communications on the at least one specific channel without unnecessarily increasing transmit power on other channels. This is illustrated schematically in Figure 1.

Moreover, the proposed method allows the network to boost transmit power of important uplink channels to ensure reliable reception of important uplink control channel information. In this way the network functionality will be improved in those cases where poor uplink quality limits a UEs capability of communicating with a serving node.

One particular example of an embodiment of the method comprises performing the step of generating S10 the individual gain factor command based on the quality of said at least one specific channel. This will provide a truly dynamical way of controlling the transmit power of the UE by allowing an increase or a boost of the UEs transmit power if the transmit power is considered too low. Thus, for example during a soft handover in a network, a network node may determine that information received from a UE is incomplete, or otherwise non-satisfactory, and that this stems from a poor uplink. Hence the network node could, by using the proposed method, provide the UE with a gain control command that allows the UE to increase or boosts its transmit power for at least some of the more important communication channels. The method therefore provides a way out of the scenario where repeated retransmission attempts are performed by the UE.

One possible way to implement this functionality is for the method to allow the network to boost the transmit power for the at least one specific channel when the quality of the at least one channel decreases below a threshold.

One example way to implement this is using one or more gain offset values. The method will therefore generate a gain factor that includes one or more gain offset values.

Gain factor commands, or gain control commands as they are also referred to, may be sent to UEs using different time scales, for example continuously (slot-based or transmission time interval (TTI)-based), periodically, using a pre-defined pattern, or whenever the gain factor of an uplink channel needs to be increased or decreased.

Another aspect of the technology is that different gain factor commands may be used for different channels. Example implementations include time-division or coding. The gain factor commands may have different degree of robustness, e.g., by using different coding levels such as no coding, repetition, or robust coding.

The amount of information contained in one gain factor command may correspond to one or more bits indicating, e.g., UP/DOWN, UP/DOWN/HOLD, UP value x, DOWN value y, etc.

The dynamic gain factor commands, or equivalently the dynamic gain control commands, may be sent on an existing, new, or modified physical channel. For example, the existing Fractional Dedicated Physical Channel (F-DPCH) in WCDMA uses two bits for issuing one power control command.

In one particular embodiment of the method the dynamic gain control command is therefore sent on a Fractional Dedicated Physical Channel, F-DPCH, or a Fractional Transmitted Precoding Indicator Channel, F-TPICH.

One alternative is to let one of these bits correspond to the traditional transmit power control (TPC) command and the other bit correspond to the dynamic gain factor control command. In this way there is provided a method that utilizes the possibility to send one bit on the F-DPCH which corresponds to a traditional Transmit Power Control, TPC, command and where the other bit corresponds to the dynamic gain control command.

Another example is to allocate a new slot format of existing F-DPCH or Fractional Transmitted Precoding Indicator Channel (F-TPICH) to carry dynamic gain factor information. In this example a new slot format tis allocated on said F-DPCH or F-TPICH to carry the dynamic gain control command.

For some channels, the UE and base station nodes in the UE's active set need a consistent view on used gain factors for efficient operation. In such cases, a reliable update mechanism is desirable. For other channels, the exact gain factor may not be important. In this latter situation, a simple transmit power control mechanism may suffice, e.g., a conventional TPC loop. Dynamic updating may also be implemented by speeding-up existing Shared Control Channel for HS-DSCH (HS-SCCH) orders, e.g., by reducing round-trip time. For example, it might be unnecessary to ACK an HS-SCCH order used for boosting a channel. Another example is to let the UE apply the HS-SCCH order immediately after reception and then send an ACK.

The boosted control channel, e.g., a boosted DPCCH, may be managed in different ways. Some non-limiting examples are described below, and various combinations of these examples are possible.

One example is to allow the network to control the dynamic boost or gain commands either in a semi-static fashion, e.g., using higher-layer signaling, or more dynamically, e.g., using HS-SCCH orders. The controlling functionality in one or more network nodes includes, but is not limited to determining:
1- when to trigger/release the boost or gain command.
2- how the boost or gain commands should be sent, e.g., continuously, periodically, using a pre-defined pattern, or when some other particular or important information is conveyed.
3- which gain or beta-values that should be controlled using a boost or gain command.
4- timer settings, e.g., the frequency of duration of sending a boost or gain command.

Example criteria for when to use dynamic gain commands include, but are not limited to:
1-when enabled by higher-layers or HS-SCCH orders
2-when entering soft handover or whenever entering soft handover involving nodes of different transmit powers (potentially a large imbalance between UL and DL).
3-when the quality of control channels, e.g., HS-DPCCH or E-DPCCH, decreases below a threshold.
4-when the quality of a data channel, e.g., E-DPDCH, decreases below a threshold.

For example, if the serving node continuously fails to decode data it is an indication that the uplink is poor. Also, if an estimated signal-to-interference ratio (SIR) is below an SIR target for some time, it is an indication that another node may be handling power control of the UE connection and that the uplink may be weak.

The method of enabling a transmit power adjustment as described earlier could equally well be performed by a single network node or by several network nodes.

To further add to the understanding of the earlier method there is here provided a specific non-limiting and concrete example of how the method could be implemented in a particular embodiment. Assume first that some entity, a network node or a particular User Equipment, UE, within the network, has determined that the quality of the uplink, which could, for example, be the uplink High Speed Dedicated Physical Control Channel, HS-DPCCH, is varying between satisfactory and too poor for adequate downlink operation. Assume further that it is important that the UE can send information on at least one particular uplink channel, for example, the uplink High Speed Dedicated Physical Control Channel, HS-DPCCH. During these particular circumstances it is possible to use the proposed method to dynamically increase, or boost, the transmit power of the UE for the HS-DPCCH. After it has been determined that the specific uplink channel needs a transmit power boost the network will generate a gain factor and determine a gain control command corresponding to the gain factor for the transmit power on the particular channel. This gain control command will be used to enable a dynamical boost of the transmit power. The network will inform the UE that it will dynamically boost the transmission on the HS-DPCCH by sending the gain control command to the UE. The gain control command corresponding to the gain factor includes information about which channel or channels that will be boosted by means of dynamical transmit power control and it could also include information relating to how and how often the channel(s) will be dynamically boosted. In this particular example the HS-DPCCH will be boosted and we can assume that boosting information will be sent in a control command that represents, for example, up or down and that this information will be conveyed every TTI on the F-DPCH using a special slot format. Thus the following sequence can be foreseen for this particular example:

### Example I

A. The quality of the uplink is deemed to be poor. We assume here that this is determined by the network, for example by a serving NodeB.
B. The network (RNC or the serving NodeB) determines in a step S20 a gain control command that corresponds to a gain factor generated in step S10 for the HS-DPCCH. The gain control command might comprise, beside information about the gain factor, information relating to which particular channel(s) that shall be dynamically boosted, how often the gain control command should be conveyed, how the information shall be conveyed etc. Thus the gain control command gives instructions to the UE of how the transmit power boost shall be operated. The gain factor command is then sent in a step S30 to the UE.

The above steps are in this particular example performed on the network side. After the gain control command has been sent to the UE and received by the same a transmit power increase or boost has been enabled. Thus after this initialization the operation of the dynamical transmit power boost ensues on the UE side. Thus for the UE the following steps can be foreseen in this particular example:
I. Each Time Transmission Interval, TTI, the UE will receive information in the form of gain control command sent from the network. The information will, in this particular example, comprise an UP or DOWN command indicating whether the transmit power shall be increased or decreased.
J. In the given example is the gain control command sent in a particular slot format on the F-DPCH. Thus the UE will listen for the gain control command on this particular channel.
K. If the UE receives a gain control command that comprises a UP command, this command enables an increase of the transmit power with one step, while a command with DOWN enables the UE to lower its transmit power with one step. The magnitude of the gain corresponding to such a step might be set in advance corresponding to the actual demands of the network regarding, for example, the risk of interference and alike. It could for example correspond to the case where the amplitude ratio is increased or decreased by an amount of 1 dB or the gain factor is increased with an amount of 1 dB. Other variants are however equally possible. There might also be other constraints that determine the possible values of the size of the gain factor. The particular values to be used are therefore dependent upon the particularities of the network and the values are as such not considered essential for the method to work.

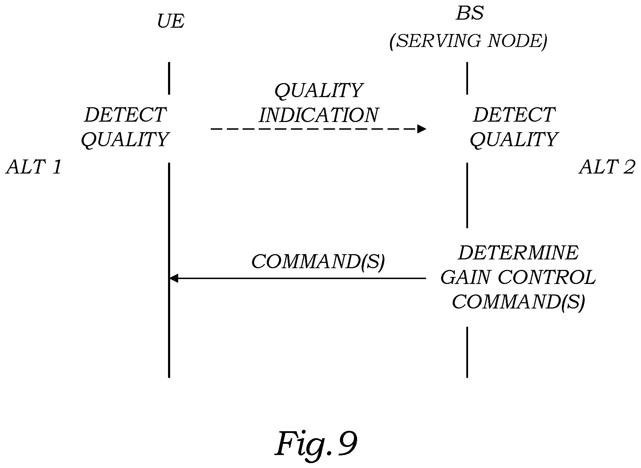

After the above given sequence has been completed the transmit power of the UE for the specific channel, HS-DPCCH, has been dynamically increased and the UE is now allowed to transmit with better quality on the uplink. This example is schematically illustrated by the signaling diagram in Figure. 9.

The dynamic gain control command functionality may be UE-triggered. For example, the UE determines that the serving cell (or any cell) is unnecessarily retransmitting too much, and hence, deduces that the radio link towards that node is poor. For example, the UE have already sent a Hybrid Automatic Repeat Request Acknowledgement, HARQ-ACK, to acknowledge a successful reception of a downlink transmission from the serving cell, but the serving cell keeps sending the repetition of the already successfully received message. The UE then deduces that the cause Is poor radio UL toward the serving cell, resulting in the HARQ-ACK not being received at the serving cell. The UE informs the RNC, and the RNC sends the UE a dynamic gain command to increase transmit power (and may also inform the NodeBs).

The method can also be triggered by the network as has been described earlier.

More generally, there is provided a method of enabling an adjustment of the transmit power of a User Equipment, UE, in a wireless network. The method comprises the steps S40 of determining the uplink signal quality, the step S50 of informing a network node of the uplink signal quality to enable the network node to determine a dynamic gain control command that corresponds to an individual gain factor for at least one specific channel and the step S60 of receiving the dynamic gain factor command from the network node to thereby enable the UE to increase or boost the transmit power for communications on said at least one specific channel without unnecessarily increasing transmit power on other channels.

A specific example of the above method will now be presented. This constitutes a non-limiting example whose purpose is to facilitate the understanding of the method. There is therefor made a number of initial assumptions that will give a more concrete formulation of the example. First it is assumed that the uplink channel in need of a boost is HS-DPCCH. It is furthermore assumed that the gain control command is sent on a physical channel such as F-DPCH. Yet another assumption is that the gain control command comprises information relating to UP and DOWN indicating whether the transmit power of the UE should be increased or decreased. DOWN might in this case also indicate that the transmit power should be kept at the initial un-boosted level. This might be the case if the network node, or the Radio Network Controller, RNC, serving the UE deems that a boost of the transmit power might lead to interference within the cell and that a boost therefor is inappropriate during this particular time. Finally we will assume that the generated gain factor has a magnitude of 1 dB. That is, the amplitude of the uplink signal is allowed to be increased with 1 dB.

With these assumptions made the following scenario can be foreseen:

### Example II

L. The quality of the uplink is determined in step S40. This step can be performed either by the serving NodeB or by the UE. One possible way is to keep count of the number of retransmission attempts that has been made. If this number is higher than a specified value the quality is deemed to be poor. Other possibilities exist as has been explained earlier.
M. If the quality of the uplink is deemed poor, the network node is informed of this in a step S50 to thereby enable the network node to generate a gain factor and a corresponding gain control command that shall be sent to the UE.
N. After the gain control command has been sent from the network node, the UE, who listens for a gain factor command on the F-DPCH receives such a command on this channel. If the gain control command comprises UP information a transmit power boost of the uplink HS-DPCCH has been enabled. Thus the UE will transmit on this channel with slightly larger amplitude (1 dB in the present example) which will increase the chances of a successful uplink transmission.

The network node can in this particular example continue to send the gain control command during each TTI. If this command is changed, let say from UP to DOWN, the transmit power will be lowered from its boosted value to, for example, its initial value. In this way the network node has dynamically enabled a transmit power boost for the UE which will enhance the chances of successful transmissions on specific channels.

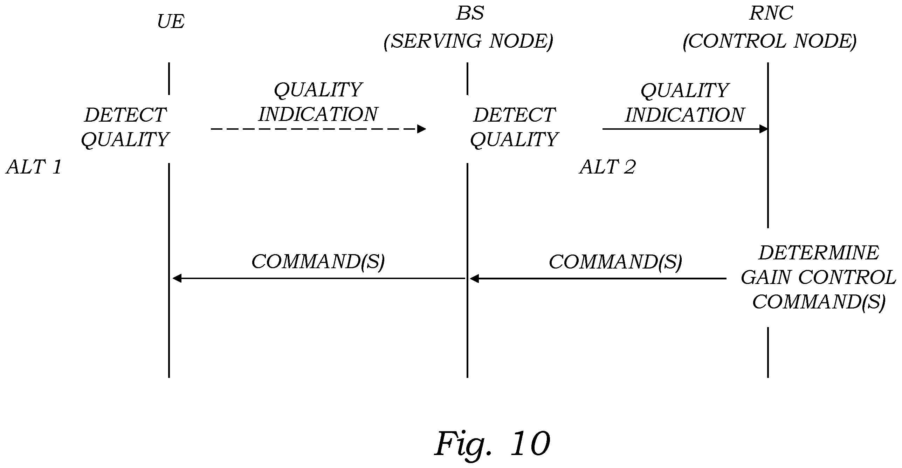

It should be noted that an alternative is to let the serving node inform the Radio Network Controller, RNC, about the quality of the uplink. In this embodiment is it possible to let the RNC generate the gain control command, or gain control commands, and transmit these to the network node for further distribution to the UE. This is schematically illustrated in the signaling scheme of Figure 10. Such an implementation might have advantages when it comes to the manageability of the entire network in those cases where a lot of UEs are in need of power boosts. To lessen the amount of information that needs to be sent between the network nodes and the RNC the RNC will only generate gain control commands if it is deemed that a particular power boost would not affect the interference within a particular cell.

In particular cases it is advantageous if the UE determines the uplink quality. The determining step S40 should therefore be performed by the UE. The method as given in the example II above is therefore initiated by the UE through the determining step S40. Thus, the UE will in this particular embodiment perform the determining step S40 as well as the step of informing the network node S50 and the step of receiving S60 the gain control command.

As given in example II above, in one possible embodiment of the method is the dynamical gain control command received from the network node on a Fractional Dedicated Physical Channel, F-DPCH, or a Fractional Transmitted Precoding Indicator Channel, F-TPICH.

The uplink signal quality to a particular base station may also be sent to the RNC, the serving node, or all other nodes involved in the SHO. Communications may take place using a fast backhaul or via the RNC. From this information, the RNC or the serving base station may deduce whether to employ the dynamic gain control command functionality.

Similar or inverted criteria may be used to determine when to stop using the dynamic gain control command functionality.

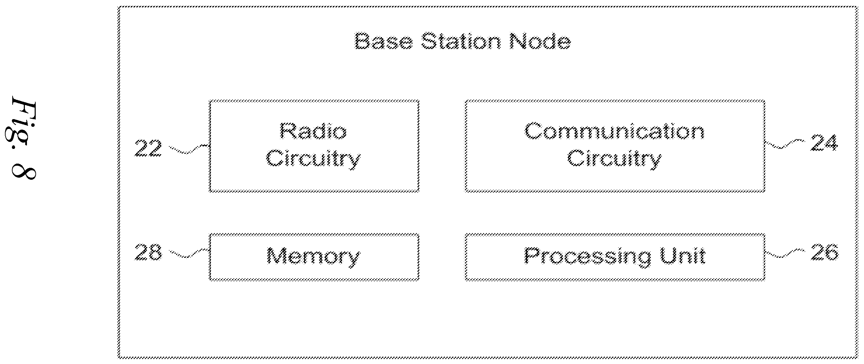

Figure 8 shows a non-limiting example function block diagram of a base station (macro and/or low power) that may be used to implement the technology described above. The base station includes radio circuitry 22 to communicate with UEs and perhaps other nodes, e.g., relay nodes, communication circuitry 24 to communicate with other radio network and core network nodes, memory 28 to store data information and computer program information, and one or more data processing units 26 for implementing the tasks and steps described above, e.g., using the programs and data stored in memory 28. The radio circuitry 22 is configured to detect UL signals received from UEs so that received signal quality can be evaluated and reported if desired to another network node such as an RNC for example. The radio circuitry 22 is also configured to send dynamic gain control commands to one or more UEs to permit the UE to dynamically adjust its gain value. The communication circuitry 24 is configured to receive information (dynamic gain control command information, SHO information, measurement information, etc.) from other base stations and other network nodes such as an RNC. The processing unit(s) 26 are configured to use determine if not received from an RNC dynamic gain control commands and to cause them to be sent to the UEs for specific uplink channels. The memory 28 is configured to store program and data information to permit the base station to carry out its tasks described above.

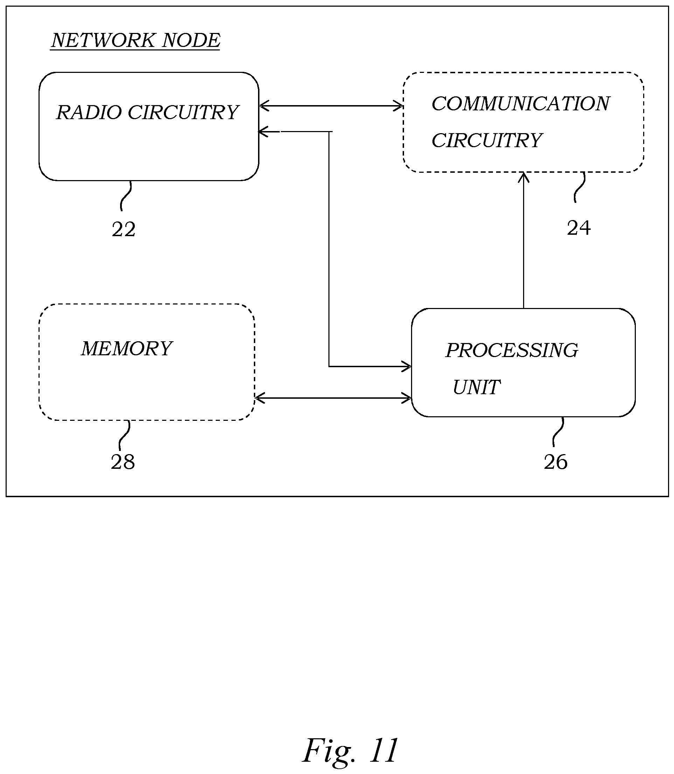

As illustrated in Fig.11 there is thus provided a network node, that comprises a processing unit 26 configured to determine, for a User Equipment, UE, an individual gain factor for at least one specific channel and to determine a gain control command corresponding to said gain factor for the at least one specific channel. The network node also comprises a radio circuitry 22 that is configured to send the dynamic gain control command to the UE to thereby enable the UE to increase or boost the transmit power for communications on the at least one specific channel without unnecessarily increasing transmit power on other channels. This network node is illustrated in a block diagram in Figure.8. A more detailed version showing illustrating the interconnections between the entities in the network node is illustrated in Figure. 11.

The technology may also be implemented in the UE or in the RNC. The UE includes similar function blocks as in Figure 8. The RNC in turn includes similar function blocks as in Figure 8 but without the radio circuitry 22.

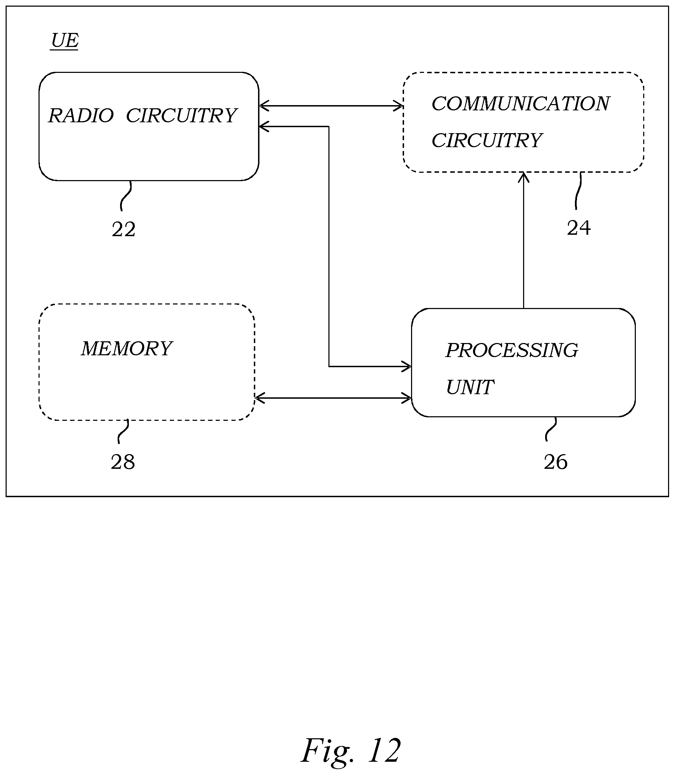

As illustrated in Figure 12 there is thus provided a User Equipment, UE, that comprises radio circuitry 22 configured to receive a dynamic gain control command that corresponds to an individual gain factor for at least one specific channel. The UE also comprises a processing unit 26 configured to process the dynamic gain control command to thereby enable the UE to increase or boost transmit power for communications on the at least one specific channel without unnecessarily increasing transmit power on other channels.

In one particular example of a User Equipment, UE, according to the above, is the processing unit 26 configured to determine the quality of the uplink signal. The radio circuitry 22 is in turn configured to inform a network node of the quality of the uplink signal, to thereby enable the network node to determine the dynamic gain control command, and to receive the dynamic gain control command form the network node.

The technology described herein solves problems associated with DL/UL communication involving several links, where some of the links are weak, by dynamically and selectively setting the gain factors for specific weak UL channels. The technology described may be combined with other solutions, e.g., boosting of other channels), and may also be applied to networks other than heterogeneous networks.

Although the description above contains many specifics, they should not be construed as limiting but as merely providing illustrations of some presently preferred embodiments. The principles of the technology described may be applied to other radio access technologies. Indeed, the technology fully encompasses other embodiments which may become apparent to those skilled in the art. Reference to an element in the singular is not intended to mean "one and only one" unless explicitly so stated, but rather "one or more." None of the above description should be read as implying that any particular element, step, range, or function is essential. All structural and functional equivalents to the elements of the above-described preferred embodiment that are known to those of ordinary skill in the art are expressly incorporated herein by reference.

It will be appreciated that the methods and devices described above can be combined and re-arranged in a variety of ways, and that the methods can be performed by one or more suitably programmed or configured digital signal processors and other known electronic circuits (e.g. discrete logic gates interconnected to perform a specialized function, or application-specific integrated circuits).

Many aspects of this invention are described in terms of sequences of actions that can be performed by, for example, elements of a programmable computer system.

User equipment embodying this invention include, for example, mobile telephones, pagers, headsets, laptop computers and other mobile terminals, and the like.

The steps, functions, procedures and/or blocks described above may be implemented in hardware using any conventional technology, such as discrete circuit or integrated circuit technology, including both general-purpose electronic circuitry and application-specific circuitry.

Alternatively, at least some of the steps, functions, procedures and/or blocks described above may be implemented in software for execution by a suitable computer or processing device such as a microprocessor, Digital Signal Processor (DSP) and/or any suitable programmable logic device such as a Field Programmable Gate Array (FPGA) device and a Programmable Logic Controller (PLC) device.

It should also be understood that it may be possible to re-use the general processing capabilities of any device in which the invention is implemented. It may also be possible to re-use existing software, e.g. by reprogramming of the existing software or by adding new software components.

Moreover, this invention can additionally be considered to be embodied entirely within any form of computer-readable storage medium having stored therein an appropriate set of instructions for use by or in connection with an instruction-execution system, apparatus, or device, such as a computer-based system, processor-containing system, or other system that can fetch instructions from a medium and execute the instructions.

The software may be realized as a computer program product, which is normally carried on a non-transitory computer-readable medium, for example a CD, DVD, USB memory, hard drive or any other conventional memory device. The software may thus be loaded into the operating memory of a computer or equivalent processing system for execution by a processor.

The computer/processor does not have to be dedicated to only execute the above-described steps, functions, procedure and/or blocks, but may also execute other software tasks.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A method performed by a network node for enabling adjustment of transmit power of a User Equipment, UE, in a wireless network, wherein said method comprises the steps of:
- generating (S10) an individual gain factor for at least one specific channel based on the quality of said at least one specific channel during a soft handover;
- determining (S20) a dynamic gain control command corresponding to said individual gain factor;
- sending (S30) said dynamic gain control command to said UE to enable the UE to increase or boost the transmit power for uplink communications on said at least one specific channel without having to increase the transmit power on other channels.

2. Method according to claim 1, wherein said method allows the network to boost transmit power of specific uplink channels to ensure reliable reception of uplink control channel information.

3. Method according to any of the claims 1 to 2, wherein said method allows the network to boost the transmit power for said at least one specific channel when the quality of said at least one channel decreases below a threshold.

4. Method according to claim 3, wherein said method further comprises the step S40 of detecting said quality for said at least one specific channel, or receiving an indication of said quality from said UE.

5. Method according to any of the claims 1 to 4, wherein said dynamic gain control command is sent on a Fractional Dedicated Physical Channel, F-DPCH, or a Fractional Transmitted Precoding Indicator Channel, F-TPICH.

6. Method according to claim 5, wherein one bit on the F-DPCH corresponds to a traditional Transmit Power Control, TPC, command and the other bit corresponds to said dynamic gain control command.

7. Method according to claim 5 or 6 , wherein a new slot format is allocated on said F-DPCH or F-TPICH to carry said dynamic gain control command.

8. Method according to any of the claims 1-7, wherein gain control commands are sent to said UE continuously, such as slot based or Transmission Time Interval, TTI, based, periodically, using a predefined pattern, or whenever the gain factor of an uplink needs to be increased.

9. Method according to any of the claims 1-8, wherein said gain factor includes one or more gain offset values.

10. A method of enabling adjustment of transmit power for a User Equipment, UE, in wireless network, wherein said method comprises:
- determining S40 uplink signal quality during soft handover;
- informing S50 a network node of said uplink signal quality to enable said network node to determine a dynamic gain control command corresponding to an individual gain factor for at least one specific channel;
- receiving S60 said dynamic gain control command from said network node to enable said UE to increase or boost the transmit power for communications on said at least one specific channel without having to increase the transmit power on other channels.

11. The method of claim 10, wherein said method is performed by said UE.

12. The method according to claim 11, wherein said dynamical gain control command is received from the network node on a Fractional Dedicated Physical Channel, F-DPCH, or a Fractional Transmitted Precoding Indicator Channel, F-TPICH.

13. A network node, wherein said network node comprises:
- a processing unit (26) configured to determine, for a User Equipment, UE, an individual gain factor for at least one specific channel based on the quality of said at least one specific channel during a soft handover and to determine a gain control command corresponding to said gain factor for said at least one specific channel;
- radio circuitry (22) configured to send said dynamic gain control command to said UE to enable the UE to increase or boost transmit power for communications on said at least one specific channel without having to increase the transmit power on other channels.

14. A User Equipment, UE, wherein said UE comprises:
- radio circuitry (22) configured to receive a dynamic gain control command corresponding to an individual gain factor for at least one specific channel said individual gain factor being based on the quality of said at least one specific channel during a soft handover ;
- a processing unit (26) configured to determine uplink signal quality and configured to process said dynamic gain control command to enable said UE to increase or boost transmit power for communications on said at least one specific channel without having to increase the transmit power on other channels.

15. UE according to claim 14, wherein said processing unit (26) is configured to determine uplink signal quality and said radio circuitry (22) is configured to inform a network node of said uplink signal quality to enable said network node to determine said dynamic gain control command, wherein said dynamic gain factor command is received form said network node.

## Patentansprüche

1. Verfahren, durchgeführt durch einen Netzwerkknoten, zum Ermöglichen der Anpassung der Sendeleistung einer Benutzereinrichtung, UE, in einem drahtlosen Netzwerk, worin das Verfahren die Schritte umfasst:
- Erzeugen (S10) eines individuellen Verstärkungsfaktors für mindestens einen spezifischen Kanal basierend auf der Qualität des mindestens einen spezifischen Kanals während einer weichen Verbindungsübergabe;
- Bestimmen (S20) eines Befehls zur dynamischen Verstärkungssteuerung, der dem individuellen Verstärkungsfaktor entspricht;
- Senden (S30) des Befehls zur dynamischen Verstärkungssteuerung an die UE, um der UE zu ermöglichen, die Sendeleistung für Aufwärtsstreckenkommunikationen auf dem mindestens einen spezifischen Kanal zu erhöhen oder anzuheben, ohne die Sendeleistung auf anderen Kanälen erhöhen zu müssen.

2. Verfahren nach Anspruch 1, worin das Verfahren dem Netzwerk ermöglicht, die Sendeleistung spezifischer Abwärtsstreckenkanäle anzuheben, um zuverlässigen Empfang von Aufwärtsstrecken-Steuerkanalinformationen zu gewährleisten.

3. Verfahren nach einem der Ansprüche 1 bis 2, worin das Verfahren dem Netzwerk ermöglicht, die Sendeleistung für den mindestens einen spezifischen Kanal anzuheben, wenn die Qualität des mindestens einen Kanals unter einen Schwellenwert sinkt.

4. Verfahren nach Anspruch 3, worin das Verfahren ferner den Schritt S40 umfasst: Ermitteln der Qualität für den mindestens einen spezifischen Kanal oder Empfangen einer Angabe der Qualität von der UE.

5. Verfahren nach einem der Ansprüche 1 bis 4, worin der Befehl zur dynamischen Verstärkungssteuerung auf einem geteilten zweckgebundenen physischen Kanal, F-DPCH, oder einem geteilten Sende-Vorcodierungsindikatorkanal, F-TPICH, gesendet wird.

6. Verfahren nach Anspruch 5, worin ein Bit auf dem F-DPCH einem herkömmlichen Befehl zur Sendeleistungssteuerung, TPC, entspricht und das andere Bit dem Befehl zur dynamischen Verstärkungssteuerung entspricht.

7. Verfahren nach Anspruch 5 oder 6, worin ein neues Schlitzformat auf dem F-DPCH oder F-TPICH zugewiesen wird, um den Befehl zur dynamischen Verstärkungssteuerung zu befördern.

8. Verfahren nach einem der Ansprüche 1 bis 7, worin Verstärkungssteuerungsbefehle kontinuierlich unter Verwendung eines vordefinierten Musters an die UE gesendet werden, wie etwa schlitzbasierend oder periodisch auf dem Übertragungszeitintervall, TTI, basierend, oder immer dann, wenn der Verstärkungsfaktor einer Aufwärtsstrecke erhöht werden muss.

9. Verfahren nach einem der Ansprüche 1 bis 8, worin der Verstärkungsfaktor einen oder mehrere Verstärkungsoffsetwerte aufweist.

10. Verfahren zum Ermöglichen der Anpassung der Sendeleistung für eine Benutzereinrichtung, UE, in einem drahtlosen Netzwerk, worin das Verfahren umfasst:
- Bestimmen (S40) einer Aufwärtsstrecken-Signalqualität während einer weichen Verbindungsübergabe;
- Informieren (S50) eines Netzwerkknotens über die Aufwärtsstrecken-Signalqualität, um dem Netzwerkknoten zu ermöglichen, einen Befehl zur dynamischen Verstärkungssteuerung zu bestimmen, der einem individuellen Verstärkungsfaktor für mindestens einen spezifischen Kanal entspricht;
- Empfangen (S60) des Befehls zur dynamischen Verstärkungssteuerung von dem Netzwerkknoten, um der UE zu ermöglichen, die Sendeleistung für Kommunikationen auf dem mindestens einen spezifischen Kanal zu erhöhen oder anzuheben, ohne die Sendeleistung auf anderen Kanälen erhöhen zu müssen.

11. Verfahren nach Anspruch 10, worin das Verfahren durch die UE durchgeführt wird.

12. Verfahren nach Anspruch 11, worin der Befehl zur dynamischen Verstärkungssteuerung auf einem geteilten zweckgebundenen physischen Kanal, F-DPCH, oder einem geteilten Sende-Vorcodierungsindikatorkanal, F-TPICH, vom Netzwerkknoten empfangen wird.

13. Netzwerkknoten, worin der Netzwerkknoten umfasst:
- eine Verarbeitungseinheit (26), die dafür konfiguriert ist, für eine Benutzereinrichtung, UE, einen individuellen Verstärkungsfaktor für mindestens einen spezifischen Kanal basierend auf der Qualität des mindestens einen spezifischen Kanals während einer weichen Verbindungsübergabe zu bestimmen und einen Befehl zur dynamischen Verstärkungssteuerung zu bestimmen, der dem Verstärkungsfaktor für den mindestens einen spezifischen Kanal entspricht;
- eine Funkschaltungsanordnung (22), die dafür konfiguriert ist, den Befehl zur dynamischen Verstärkungssteuerung an die UE zu senden, um der UE zu ermöglichen, die Sendeleistung für Kommunikationen auf dem mindestens einen spezifischen Kanal zu erhöhen oder anzuheben, ohne die Sendeleistung auf anderen Kanälen erhöhen zu müssen.

14. Benutzereinrichtung, UE, worin die UE umfasst:
- eine Funkschaltungsanordnung (22), die dafür konfiguriert ist, einen Befehl zur dynamischen Verstärkungssteuerung zu empfangen, der einem individuellen Verstärkungsfaktor für mindestens einen spezifischen Kanal entspricht, wobei der individuelle Verstärkungsfaktor auf der Qualität des mindestens einen spezifischen Kanals während einer weichen Verbindungsübergabe basiert;
- eine Verarbeitungseinheit (26), die dafür konfiguriert ist, die Aufwärtsstrecken-Signalqualität zu bestimmen, und dafür konfiguriert ist, den Befehl zur dynamischen Verstärkungssteuerung zu verarbeiten, um der UE zu ermöglichen, die Sendeleistung für Kommunikationen auf dem mindestens einen spezifischen Kanal zu erhöhen oder anzuheben, ohne die Sendeleistung auf anderen Kanälen erhöhen zu müssen.

15. UE nach Anspruch 14, worin die Verarbeitungseinheit (26) dafür konfiguriert ist, Aufwärtsstrecken-Signalqualität zu bestimmen, und die Funkschaltungsanordnung (22) dafür konfiguriert ist, einen Netzwerkknoten über die Aufwärtsstrecken-Signalqualität zu informieren, um dem Netzwerkknoten zu ermöglichen, den Befehl zur dynamischen Verstärkungssteuerung zu bestimmen, worin der Befehl zur dynamischen Verstärkungssteuerung von dem Netzwerkknoten empfangen wird.

## Revendications

1. Procédé, mis en oeuvre par un noeud de réseau, destiné à permettre un ajustement de puissance de transmission d'un équipement d'utilisateur, UE, dans un réseau sans fil, dans lequel ledit procédé comprend les étapes ci-dessous consistant à :
- générer (S10) un facteur de gain individuel pour au moins un canal spécifique sur la base de la qualité dudit au moins un canal spécifique au cours d'un transfert intercellulaire sans coupure ;
- déterminer (S20) une instruction de commande de gain dynamique correspondant audit facteur de gain individuel ;
- envoyer (S30) ladite instruction de commande de gain dynamique audit équipement UE, en vue de permettre à l'équipement UE d'augmenter ou d'amplifier la puissance de transmission pour des communications en liaison montante sur ledit au moins un canal spécifique sans avoir à augmenter la puissance de transmission sur d'autres canaux.

2. Procédé selon la revendication 1, dans lequel ledit procédé permet au réseau d'amplifier la puissance de transmission de canaux de liaison montante spécifiques en vue de garantir une réception fiable d'informations de canal de commande de liaison montante.

3. Procédé selon l'une quelconque des revendications 1 à 2, dans lequel ledit procédé permet au réseau d'amplifier la puissance de transmission pour ledit au moins un canal spécifique lorsque la qualité dudit au moins un canal diminue au-dessous d'un seuil.

4. Procédé selon la revendication 3, dans lequel ledit procédé comporte en outre l'étape S40 consistant à détecter ladite qualité pour ledit au moins un canal spécifique, ou à recevoir une indication de ladite qualité en provenance dudit équipement UE.

5. Procédé selon l'une quelconque des revendications 1 à 4, dans lequel ladite instruction de commande de gain dynamique est envoyée sur un canal physique dédié fractionnaire, F-DPCH, ou sur un canal indicateur de précodage de transmission fractionnaire, F-TPICH.

6. Procédé selon la revendication 5, dans lequel un bit sur le canal F-DPCH correspond à une instruction de commande de puissance de transmission traditionnelle, TPC, et l'autre bit correspond à ladite instruction de commande de gain dynamique.

7. Procédé selon la revendication 5 ou 6, dans lequel un nouveau format de fente est affecté audit canal F-DPCH ou audit canal F-TPICH en vue de transporter ladite instruction de commande de gain dynamique.

8. Procédé selon l'une quelconque des revendications 1 à 7, dans lequel des instructions de commande de gain sont envoyées audit équipement UE en continu, par exemple sur la base d'une fente, ou périodiquement sur la base de l'intervalle de temps de transmission, TTI, en utilisant un motif prédéfini, ou à chaque fois que le facteur de gain d'une liaison montante doit être augmenté.

9. Procédé selon l'une quelconque des revendications 1 à 8, dans lequel ledit facteur de gain inclut une ou plusieurs valeurs de décalage de gain.

10. Procédé permettant l'ajustement de la puissance de transmission pour un équipement d'utilisateur, UE, dans un réseau sans fil, dans lequel ledit procédé comporte les étapes ci-dessous consistant à :
- déterminer (S40) la qualité de signal de liaison montante au cours d'un transfert intercellulaire sans coupure ;
- signaler (S50), à un noeud de réseau, ladite qualité de signal de liaison montante, en vue de permettre audit noeud de réseau de déterminer une instruction de commande de gain dynamique correspondant à un facteur de gain individuel pour au moins un canal spécifique ;
- recevoir (S60) ladite instruction de commande de gain dynamique en provenance dudit noeud de réseau en vue de permettre audit équipement UE d'augmenter ou d'amplifier la puissance de transmission pour des communications sur ledit au moins un canal spécifique sans avoir à augmenter la puissance de transmission sur d'autres canaux.

11. Procédé selon la revendication 10, dans lequel ledit procédé est mis en oeuvre par ledit équipement UE.

12. Procédé selon la revendication 11, dans lequel ladite instruction de commande de gain dynamique est reçue en provenance du noeud de réseau sur un canal physique dédié fractionnaire, F-DPCH, ou sur un canal indicateur de précodage transmis fractionnaire, F-TPICH.

13. Noeud de réseau, dans lequel ledit noeud de réseau comporte :
- une unité de traitement (26) configurée de manière à déterminer, pour un équipement d'utilisateur, UE, un facteur de gain individuel pour au moins un canal spécifique, sur la base de la qualité dudit au moins un canal spécifique au cours d'un transfert intercellulaire sans coupure, et à déterminer une instruction de commande de gain correspondant audit facteur de gain pour ledit au moins un canal spécifique ;
- un montage de circuits radio (22) configuré de manière à envoyer ladite instruction de commande de gain dynamique audit équipement UE en vue de permettre à l'équipement UE d'augmenter ou d'amplifier la puissance de transmission pour des communications sur ledit au moins un canal spécifique, sans avoir à augmenter la puissance de transmission sur d'autres canaux.

14. Équipement d'utilisateur, UE, dans lequel ledit équipement UE comporte :
- un montage de circuits radio (22) configuré de manière à recevoir une instruction de commande de gain dynamique correspondant à un facteur de gain individuel pour au moins un canal spécifique, ledit facteur de gain individuel étant basé sur la qualité dudit au moins un canal spécifique au cours d'un transfert intercellulaire sans coupure ;
- une unité de traitement (26) configurée de manière à déterminer la qualité de signal de liaison montante, et configurée de manière à traiter ladite instruction de commande de gain dynamique en vue de permettre audit équipement UE d'augmenter ou d'amplifier la puissance de transmission pour des communications sur ledit au moins un canal spécifique, sans avoir à augmenter la puissance de transmission sur d'autres canaux.

15. Équipement UE selon la revendication 14, dans lequel ladite unité de traitement (26) est configurée de manière à déterminer la qualité de signal de liaison montante, et ledit montage de circuits radio (22) est configuré de manière à signaler, à un noeud de réseau, ladite qualité de signal de liaison montante, en vue de permettre audit noeud de réseau de déterminer ladite instruction de commande de gain dynamique, dans lequel ladite instruction de facteur de gain dynamique est reçue en provenance dudit noeud de réseau.
